# EUROPEAN PATENT SPECIFICATION

(11) **EP 0 775 462 B1**
(45) Date of publication and mention of the grant of the patent: **23.05.2001**
(21) Application number: 96118893.5
(22) Date of filing: 25.11.1996
(51) Int. Cl.: A47K 17/02, A47K 3/00, F16B 47/00

(54) **Supporting tool and method of installing same**
Haltegerät und dessen Installationsmethode
Support et sa méthode de fixation

(30) Priority: 27.11.1995 JP 33284195; 12.09.1996 JP 26552896
(43) Date of publication of application: 28.05.1997
(73) Proprietor: Hokumei Co., Ltd., Osaka-shi, Osaka-fu (JP)
(72) Inventor: Kitamura, Akio, Minoh-shi, Osaka-fu (JP)
(74) Representative: Modiano, Guido, Dr.-Ing.

(56) References cited:
- DE-C- 922 790
- FR-A- 2 311 484
- FR-A- 2 603 536
- US-A- 2 451 194
- US-A- 3 140 496
- US-A- 4 421 288
- US-A- 4 759 091
- US-A- 4 822 224
- US-A- 4 944 478
- US-A- 5 107 601
- US-A- 5 185 904
- US-A- 5 433 152

## Description

### BACKGROUND OF THE INVENTION

### Field of the Invention

The present invention relates to a supporting tool and more particularly to a supporting tool to be used in a bath room as a supporting bar to be held in the hands of old people, handicapped people, people who take care of them so as to support their bodies and as a handrail to help them walk safely; and a method of installing the supporting tool on a wall or the like.

### Description of the Prior Art

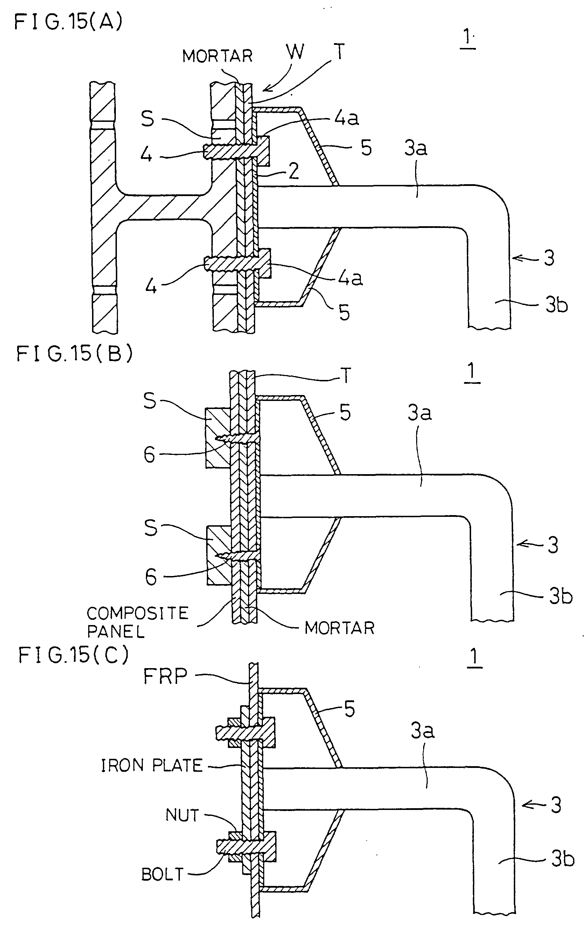

Fig. 15 (A) is a main portion-depicted sectional view showing an example of a conventional supporting tool which forms the background of the present invention. A supporting tool 1 is used as a supporting bar to be held in a handicapped person's hand to support his/her body in a bath room or the like. Ordinarily, the supporting tool 1 is installed on a wall surface W of a bath room when a house is built. The supporting tool 1 includes a base plate 2. A supporting bar body 3 projects from one main surface of the base plate 2. The supporting bar 3 comprises a supporting member 3a projecting from the base plate 2 at approximately a right angle therewith and a grasping member 3b formed at the leading end of the supporting member 3a and grasped in the handicapped person's hand. The supporting tool 1 can be used as a handrail by providing the long grasping member 3b along a walking path. The base plate 2 of the supporting tool 1 is installed on the wall surface W of the bath room by means of an anchor bolt 4, with the base plate 2 in contact with the wall surface W. In this case, a joist S is mounted at the rear of the wall surface W. In the case of the supporting tool 1 shown in Fig. 15 (A), the joist S is made of a concrete block. Cement mortar is applied to the surface of the joist S, and the cement mortar is covered with a tile T.

One end of the anchor bolt 4 is fixed to the joist S by screwing it into the joist S through the base plate 2 of the supporting tool 1 and the tile T of the wall surface W. The base plate 2 is fixed to the wall surface W by tightening a nut 4a positioned at the other end of the anchor bolt 4 on the base plate 2. The one main surface of the base plate 2 is covered with a decorative flange 5 to cover the other end of the anchor bolt 4 and the nut 4a.

In the above example, instead of the anchor bolt, screws or nails may be used to fix supporting tools 1 to the wall surface W. The joist S shown in Fig. 15 (B) is made of wood. A board so-called composite panel is bonded to the surface of the joist S. Cement mortar is applied to the surface of the board. The cement mortar is covered with a tile T. The supporting tool 1 is fixed to the wall surface W by means of a wooden screw 6 tightened into the joist S.

Fig. 15 (C) shows a case in which the supporting tool 1 is installed on a wall surface W of an FRP of a built-in bus (unit-bus). In this case, the joist S into which a bolt or the like is screwed is not mounted inside the wall surface W. Thus, in order to install the supporting tool 1 on the wall surface W, it is necessary to fasten the supporting tool 1 by means of a bolt and nut at both sides of the wall surface W through an iron plate or the like.

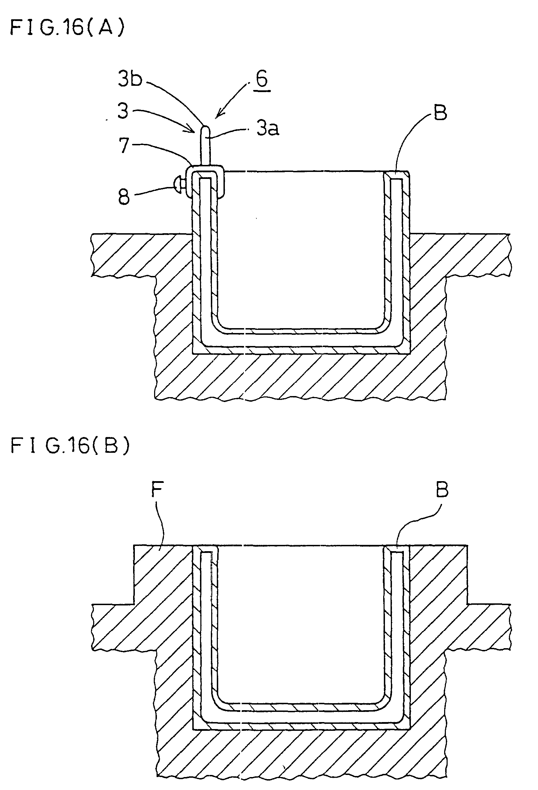

Fig. 16 (A) is a sectional view showing another example of a conventional supporting tool which forms the background of the present invention. The supporting tool 6 is installed at a corner of a bath tub B without forming a hole on the bath tub B to prevent water leakage. The supporting tool 6 includes a base plate 7 of approximately U-shaped cross section. The base plate 7 is installed on the corner of the bath tub B by fitting the corner thereinto. A screw 8 installed on the side wall of the base plate 7 is tightened through the base plate 7 and the wall of the bath tub B. In this manner, the wall of the bath tub B is sandwiched between the leading end of the screw 8 and the inner surface of the base plate 7 of approximately U-shaped cross section.

When it is necessary to install a conventional supporting tool as shown in Figs. 15 (A) through 15 (C) in a bath room as a supporting bar or a handrail several years after a house is built, a hole is required to be formed on a wall of the bath room with an expensive special drill. Because tiles are slippery and easily broken, professional skill is required to make the hole on the tile at a selected position as desired. Thus, it is necessary to request a professional person to do the installing work, which makes the cost of the installing work high. There is a case in which even the professional person must make holes in order to check whether the joist S is mounted at a position where the supporting tool 1 is to be installed. Further, if the joist S is made of wood, it may have been rotten. In this case, the supporting tool 1 cannot be installed at a desired strength even though the anchor bolt 4 is tightened on the joist S. Moreover, the supporting tools 1 as shown in Figs. 15 (A) through 15 (C) necessitate a hole to be formed on an installing surface. Therefore, it is impossible to install them on the bath tub B to prevent water leakage. For the reason described above, it is difficult for a user to install the conventional supporting tools at a desired position. In addition, fcr the reasons described above, there is a possibility that the professional person does not accept a request for the installation of the supporting tool 1 if the request is made several years after a house is constructed.

Moreover, the supporting tool 6 as shown in Fig. 16 (A) cannot be installed on the corner of the bath tub (B) if the thickness of the wall at the corner is changed greatly. Furthermore, if a floor F is continuous with the upper surface of the bath tub B, as shown in Fig. 16 (A), the supporting tool 6 cannot be installed on the corner of the bath tub (B) because the thickness of the corner is too large.

US-A-3 140 496 describes a bath tub grip consisting of a base plate intended for mounting on a wall. The base plate is provided on one surface thereof with a handle, the opposite surface being provided with slots or knurls that cross each other along the centre line of the surface. The slotted/knurled surface is provided with an appropriate adhesive for mounting to a wall.

DE-C-922 790 describes a supporting device with an angled bar supported on respective roses. Each end of the bar is fixed to a respective rose by means of a screw extending in a perpendicular direction to the attachment surface of the rose. A countersink is provided at the attachment surface of each rose to accommodate the screw. The attachment surface is further provided with an adhesive. Thus, one can adjust the bar in respect to the roses, such that the supporting device is usable in connection with non-even walls.

US-A-4 759 091 describes a brush assembly for bath or shower use including a multitude of suction cups for wall attachment on one side of a base plate, the suction cups being part of a suction cup sheet 1a. The opposite side of the base plate secures the brush members in an adhesive manner. Detachment of the base from the attachment wall is effected by means of a lever rotatable to release the suction cups from the wall.

US-A-4 822 224 describes a harness retainer stud having a plate provided on one side thereof with a ring shaped seal. The seal has a contact adhesive formed on a surface thereof opposing the plate. Further, within the seal, there is provided an uncured adhesive. In use the stud is first temporarily adhered to the contact surface with the contact adhesive. Subsequently the seal is compressed such that the uncured adhesive also touches the contact surface and can be adhered thereto.

US-A-2 451 194 describes an adhesive-containing suction cup. The adhesive is provided in a reservoir at the convex side of the cup and can be released via a slit at the concave side of the cup. The slit is opened before applying the cup to the surface to which it is to be adhered. Thus, the adhesive spreads on that surface towards the edge of the cup to seal the suction and insures a strong adhesion of the suction device to the surface.

US-A-4 421 288 describes a suction cup with an adhesive stripe 26 at the concave portion of the cup.

### SUMMARY OF THE INVENTION

It is accordingly a main object of the present invention to provide a supporting tool which can be installed on a wall or the like as a supporting bar or a handrail by everybody at a desired position easily and at a low cost whenever he/she desires to do so after a house is built.

The above object and further objects which will become apparent hereinafter are achieved by a supporting tool and a method of installing a supporting tool, as defined in claims 1, 3 and 7. The dependent claims specify the preferred embodiments.

A supporting tool according to a prefered embodyment is grasped by a utilizer to support his/her body, comprising a sucking pad removably sucked to an installing surface such as a wall surface or the like; a shaft-shaped connection member, one end side of which extends vertically from one main surface of the sucking pad; a pedestal with connected with the other end of the connection member and covering the one main surface of the sucking pad; a supporting bar body which projects from one main surface of the pedestal and is grasped by the utilizer; and an adhesive agent layer covering the one main surface of the sucking pad and the other main surface thereof and fixing the pedestal or the sucking pad to the installing surface.

The sucking pad of the supporting tool can be sucked to an installing surface at a predetermined position. Therefore, even though the viscosity of the adhesive agent is low because it is not hardened, the supporting tool can be held at the predetermined position by means of the sucking pad until the adhesive agent is dried/hardened. That is, the supporting tool can be prevented from being dislocated from the installed position. After the adhesive agent layer is dried/hardened, the supporting tool can be fixed to the installing position with a higher degree of strength. Further, the adhesive agent layer allows the installing surface to be smooth, thus permitting the sucking pad to be bonded and sucked to the installing surface at high adhesive and sealing degrees. Therefore, the sucking pad can be sucked to the installing surface even though the installing surface is irregular in a small degree. After the adhesive agent is dried/hardened, the supporting tool can be fixed to the installing surface firmly.

A supporting tool according to a preferred embodiment is grasped by a utilizer to support his/her body, comprising a sucking pad which is elastic and one main surface of which is removably sucked to an installing surface; a shaft-shaped connection member, one end side of which extends vertically from the other main surface of the sucking pad; a pedestal having a pressing portion consisting of an annular projection member which presses a periphery of the sucking pad and through which the connection member is inserted; a supporting bar body, one end of which is fixed to a surface, of the pedestal, opposite to a sucking pad-located side and which is grasped by the utilizer; and an adhesive agent layer formed on at least one main surface of the sucking pad and fixing the sucking pad to the installing surface. In this construction, a rotary member is mounted to the pedestal such that its rotation, with the periphery of the sucking pad being pressed against the installing surface by means of the pressing portion, causes the connection member to move upward from an upper surface of the pedestal. As a result, the sucking pad is elastically deformed to form a negative pressure portion, with the adhesive agent layer interposed between the installing surface and the sucking pad.

In this case, in addition to the above-described effect, the sucking pad is elastically deformed when the cam is rotated to move the connection member upward from the upper surface of the pedestal. As a result, the negative pressure portion is formed between the sucking pad and the installing surface, with the adhesive agent layer interposed between the installing surface and the sucking pad. Although the adhesive agent layer is interposed between the installing surface and the sucking pad, the sucking force of the sucking pad can be increased by forming the negative pressure portion.

According to the present invention, a method of installing a supporting tool, to be held by a utilizer, on the best position of an installing surface to which a sucking pad of the supporting tool is removably sucked, comprises the steps of determining the best position on which the supporting tool is installed, by attaching the supporting tool on the installing surface by means of the sucking pad temporarily; removing the supporting tool from the installing surface after giving a mark on the determined position and applying adhesive agent to a to-be-installed side of the sucking pad; and sucking the adhesive agent-applied sucking pad to the marked position again and drying or hardening the adhesive agent.

According to this method, the supporting tool can be removably mounted on the installing surface by means of the adhesive agent-unapplied sucking pad. Thus, the most suitable installing position of the supporting tool can be determined without forming a hole on the installing surface or injuring it. Thereafter, the sucking pad is coated with adhesive agent and the supporting tool is bonded to the desired position of the installing surface. In this manner, the supporting tool can be fixed to the best position.

A supporting tool according to the present invention is grasped by a utilizer to support the utilizer's body, comprising a base plate which is installed on an installing surface such as a wall surface or the like, with the substrate in contact with the installing surface; a supporting bar body which projects from one main surface of the base plate and is grasped by the utilizer; and an adhesive means formed on the other main surface of the base plate and fixing the base plate to the installing surface.

In this case, the supporting tool can be firmly fixed to the installing surface such as a wall surface by means of the adhesive means formed on the other main surface of the base plate. Accordingly, the supporting tool can be easily mounted on a desired position of the wall surface or the like at a low cost even by a person unskilled in the installing work, after a house is built. People can hold the supporting tool body in their hands as a supporting tool or a handrail.

According to the present invention, the adhesive means includes a base material; a first adhesive agent layer formed on one main surface of the base material and fixing the base material to the base plate; and a second adhesive agent layer formed on the other main surface of the base material and fixing the base material to the installing surface.

In this case, the base material interposed between the first adhesive agent layer and the second adhesive agent layer functions as a cushioning material, thus increasing the strength against a momentary force applied to the supporting tool body. Further, the first adhesive agent layer is formed of adhesive agent which is suitably adhesive to the base plate, and the second adhesive agent layer is formed of adhesive agent which is suitably adhesive to the installing surface. Therefore, even though the adhesive property of the base plate and that of the installing surface are different from each other, the fixing strength of the supporting tool can be improved by selecting appropriate adhesive agent.

Further, according to the present invention, the adhesive means includes a bonding material formed on a part of the other main surface of the base plate and attaching the base plate to the installing surface temporarily; and adhesive agent which is formed on a part of the other main surface of the base plate such that the adhesive agent is positioned in an area other than the area occupied with the bonding material and which fixes the base plate to the installing surface. The bonding material includes a base material; a first adhesive agent layer formed on one main surface of the base material and fixing the base material to the base plate; and a second adhesive agent layer formed on the other main surface of the base material and consisting of adhesive agent of pressure-sensitive type and fixing the base material to the installing surface.

In this case, the base plate can be attached to the installing surface at a predetermined position thereof by means of the bonding material. Therefore, even though the viscosity of the adhesive agent is low because it is not hardened, the supporting tool can be held at the predetermined position by means of the bonding material until the adhesive agent is dried/hardened. That is, the supporting tool can be prevented from being dislocated from the installed position. After the adhesive agent layer is dried/hardened, the supporting tool can be fixed to the installing position with a higher degree of strength in cooperation of the bonding material and the adhesive agent.

The supporting tool of the present invention can be easily mounted on a desired position of the wall surface or the like at a low cost even by a person unskilled in the installing work after a house is built and can be utilized as a supporting bar or a handrail.

The utilizer's body can be supported by the supporting tool installed at a desired place by grasping it. Accordingly, the utilizer can get into a bath room or get out from the bath room safely by installing it at a position proximate to the slippery entrance of the bath room. Further, people can grasp the supporting tool installed on the wall surface of the bath room when they stand up. Furthermore, the supporting tool mounted in a bath tub allows them to enter a bath tub and get out from it safely. In addition, it can be utilized as a handrail by mounting it along a walk path in the bath room so that they can walk safely. Further, they supporting tool can be easily installed on an aluminum sash frame of a door or on the windowpane thereof as a supporting bar without forming a hole thereon, which allow them to open and close the door easily. As described above, the supporting tool can be conveniently utilized by children, old people, handicapped people when they take a bath. It can help people in taking care of old people, handicapped people or the like.

Furthermore, it is unnecessary to use special tools to install the supporting tool on a desired position. Thus, even unskilled person can easily install the supporting tool on the desired position at a low cost. In addition, because it is not necessary to form a hole on the desired position, people are not worried about water leakage in installing it on the bath tub.

The above and further objects, features, aspects, and advantages of the present invention will be more fully apparent from the following detailed description with the accompanying drawings.

### BRIEF DESCRIPTION OF THE DRAWINGS

Fig. 1 is an illustration showing a supporting tool, according to an embodiment of the present invention, which is cut out partly.

Fig. 2 (A) is an illustration showing the supporting tool, according to the embodiment shown in Fig. 1, in a state before a negative pressure portion is formed therein.

Fig. 2 (B) is an illustration showing the supporting tool, according to the embodiment shown in Fig. 1, in a state after the negative pressure portion is formed therein.

Fig. 3 is a perspective view showing a method of installing the supporting tool, according to the embodiment shown in Fig. 1, on an installing surface.

Fig. 4 is the perspective view showing a method of installing the supporting tool, according to the embodiment shown in Fig. 1, on the installing surface.

Fig. 5 is the perspective view showing a method of installing the supporting tool, according to the embodiment shown in Fig. 1, on the installing surface.

Fig. 6 is the perspective view showing a method of installing the supporting tool, according to the embodiment shown in Fig. 1, on the installing surface.

Fig. 7 is the perspective view showing a method of installing the supporting tool, according to the embodiment shown in Fig. 1, on the installing surface.

Fig. 8 is the perspective view showing a method of installing the supporting tool, according to the embodiment shown in Fig. 1, on the installing surface.

Fig. 9 is the perspective view showing a method of installing the supporting tool, according to the embodiment shown in Fig. 1, on the installing surface.

Fig. 10 is the perspective view showing a method of installing the supporting tool, according to the embodiment shown in Fig. 1, on the installing surface.

Fig. 11 is a plan view showing a bath room in which the supporting tool shown in Fig. 1 is installed on the wall of the bath room.

Fig. 12 is an illustration showing a supporting tool according to an embodiment useful for understanding the present invention.

Fig. 13 is a plan view showing a bath room in which the supporting tool shown in Fig. 12 is installed on the wall of the bath room.

Fig. 14 (A) is a main portion-depicted sectional view showing still an embodiment useful for understanding the present invention.

Fig. 14 (B) is a main portion-depicted sectional view showing still another embodiment of the present invention.

Fig. 15 (A) is a main portion-depicted sectional view showing an example of a conventional supporting tool which forms the background of the present invention.

Fig. 15 (B) is a main portion-depicted sectional view showing another example of a conventional supporting tool which forms the background of the present invention.

Fig. 15 (C) is a main portion-depicted sectional view showing different example of a conventional supporting tool which forms the background of the present invention.

Fig. 16 (A) is a main portion-depicted sectional view showing another example of a conventional supporting tool which forms the background of the present invention.

Fig. 16 (B) is a sectional view showing an installation state of a bath room which forms the background of the present invention.

### DESCRIPTION OF THE PREFERRED EMBODIMENTS

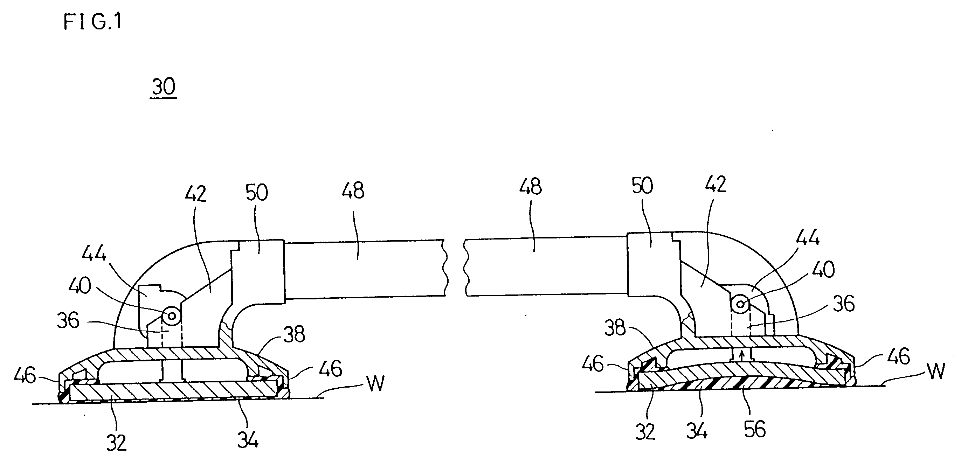

Fig. 1 is an illustration showing a supporting tool, according to an embodiment of the present invention, which is cut out partly.

In the state shown at the left-hand side in Fig. 1, a sucking pad 32 is not sucked to an installing surface, whereas in the state shown at the right-hand side in Fig. 1, the sucking pad 32 is sucked to the installing surface.

A supporting tool 30 includes the circular sucking pad 32. The sucking pad 32 is made of an elastic material, for example, rubber. An adhesive agent layer 34 is formed on one main surface of the sucking pad 32 and on a portion, of the other main surface, opposed to a pedestal 38 which will be described later.

One end of a shaft-shaped connection member 36 is fixed to the other main surface of the sucking pad 32. The one end of the connection member 36 may be fixed to the inside of the sucking pad 32.

The connection member 36 extends vertically from the other main surface of the sucking pad 32, thus penetrating through the pedestal 38 at its center.

The pedestal 38 disc-shaped in a plan view and looks like an upside-down cup is installed on the installing surface, with the sucking pad 32 covered with the pedestal 38. A horizontal shaft 40 extending in substantially parallel with the installing surface is inserted through the other end of the connection member 36 extending upward from the upper surface of the pedestal 38. Each of both ends of the horizontal shaft 40 is rotatably supported by each of approximately triangular horizontal shaft-receiving members 42 and 42. The horizontal shaft-receiving members 42 and 42 are integral with the upper surface of the pedestal 38.

A cam 44 serving as a rotary member is installed between the horizontal shaft-receiving members 42 and 42. The horizontal shaft 40 is fixed to an eccentric portion of the cam 44. When the cam 44 is rotated, the horizontal shaft 40 moves vertically in Fig. 1. In unison with the vertical movement of the horizontal shaft 40, the connection member 36 moves vertically in Fig. 1. In unison with the vertical movement of the connection member 36, the center portion of the sucking pad 32 fixed to one end of the connection member 36 moves vertically.

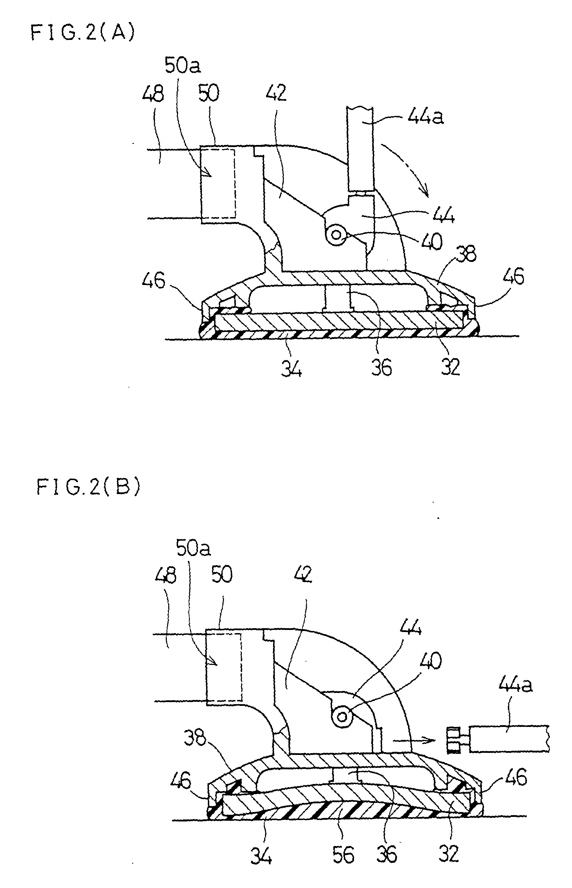

As shown in Fig. 2, an operation rod 44a is inserted into the cam 44 to rotate the cam 44. After the cam 44 is rotated, the operation rod 44a is removed from the cam 44.

An annular pressing portion 46 projects downward from the periphery of the pedestal 38 toward the sucking pad 32. The pressing portion 46 is used to press the periphery of the sucking pad 32 against the installing surface so as to attach it closely to the installing surface.

A supporting bar-receiving member 50 for holding one end of a rod-shaped supporting bar member 48 to be grasped by an operator extends upward from the upper surface of the pedestal 38. The supporting bar-receiving member 50 is approximately L-shaped in a side view and integral with the pedestal 38. The supporting bar-receiving member 50 has at the other end thereof a concave 50a into which the supporting bar member 48 is inserted through a bush.

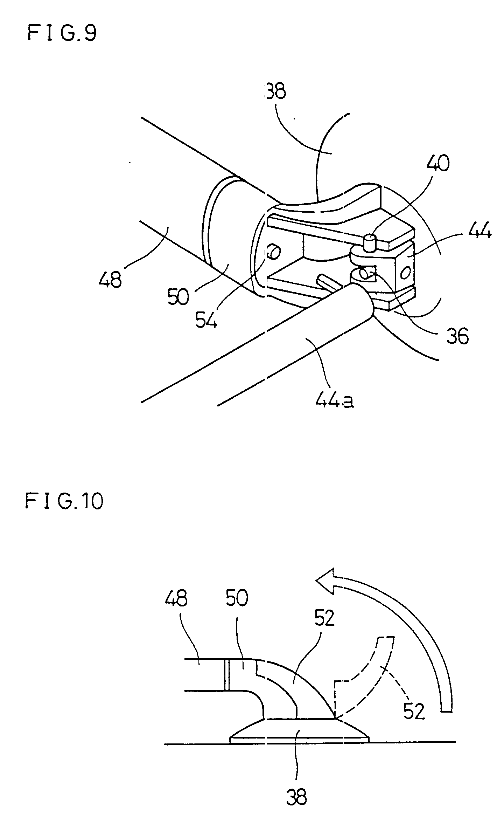

The supporting tool 30 includes a cover 52 (denoted in Fig. 10) for covering the connection member 36 installed on the pedestal 38, the horizontal shaft 40, the horizontal shaft-receiving members 42 and 42, and the cam 44. The cover 52 is installed on the pedestal 38 at the final stage of the installing work which will be described later.

The method of installing the supporting tool 30 on an installing surface will be described below.

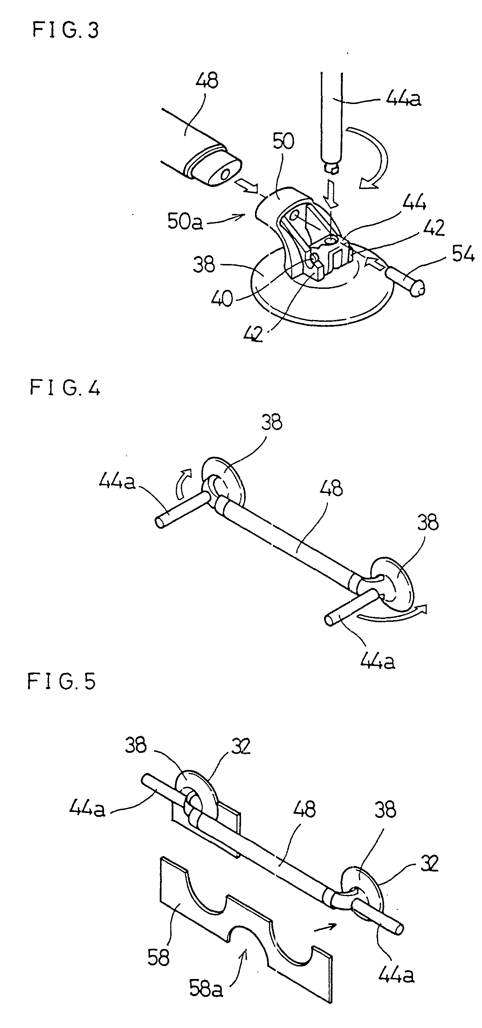

As shown in Fig. 3, initially, the supporting bar member 48 is inserted into the supporting bar-receiving member 50 and temporarily fixed thereto with a screw 54 to adjust an installing angle with respect to the installing surface by allowing the pedestal 38 to rotate around the supporting bar member 48

The operation rod 44a is fixed to the cam 44 temporarily by rotating the operation rod 44a by 90°, with one end thereof inserted into the cam 44. At this time, as shown in Fig. 2 (A), the operation rod 44a is installed on the cam 44, with the operation rod 44a substantially perpendicular to the upper surface of the pedestal 38. At this time, the sucking pad 32 is not elastically deformed.

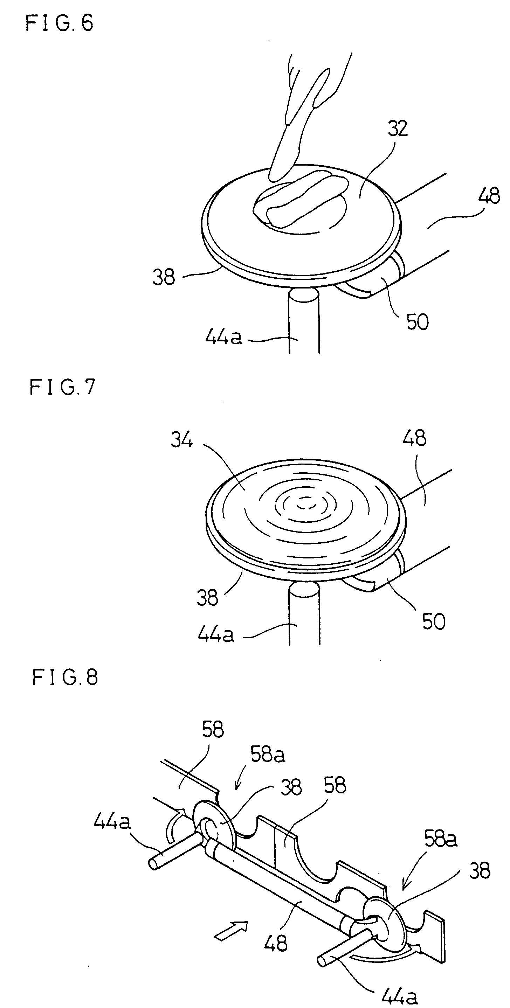

Then, as shown in Fig. 4, one main surface of the sucking pad 32 is brought into contact with the installing surface, for example, a wall surface of a bath room. Because the sucking pad 32 has not been sucked to the installing surface at this time, the installing position of the supporting tool 30 can be altered to find the best installing position on the entire wall surface.

When the supporting tool 30 is installed on the installing surface temporarily, the operator presses the supporting tool 30 against the installing surface by gripping the supporting bar member 48 so that the pressing portion 46 of the pedestal 38 presses the periphery of the sucking pad 32 against the installing surface. Consequently, the sucking pad 32 is attached to the installing surface closely.

Then, as shown by an arrow of Fig. 4, the operator pivots the operation rod 44a in substantially parallel with the installing surface to rotate the cam 44. As a result, as shown in Fig. 2 (B), the connection member 36 is moved upward from the upper surface of the pedestal 38, and in unison with the upward movement of the connection member 36, the center portion of the sucking pad 32 is elastically deformed. At this time, a negative pressure portion 56 having a pressure lower than the atmospheric pressure is formed between the sucking pad 32 and the installing surface, because the sucking pad 32 is closely attached to the installing surface by the pressing force of the pressing portion 46 applied to the periphery of the sucking pad 32, as described previously. In this manner, the sucking pad 32 can be firmly sucked to the installing surface and used as a supporting bar or a handrail temporarily.

If it is found later that there is an inconvenience at the installed position, the operation rod 44a is pivoted vertically with respect to the installing surface to rotate the cam 44. As a result, the connection member 36 is moved downward toward the sucking pad 32, thus eliminating the negative pressure portion 56 and bringing the sucking pad 32 into an unsucked state. The best installing position of the supporting tool 30 can be determined by repeating these operations.

As shown in Fig. 5, a positioning member 58 is mounted on the installing surface as a mark to be used to remove the supporting tool 30 from the installing surface temporarily. The positioning member 58 consists of a base plate on which a plurality of concaves 58a having a shape corresponding to that of the sucking pad 32 is formed. A double-coated tape is bcnded to a to-be-bonded side of the positioning member 58 so that the positioning member 58 is temporarily bonded to the installing surface with the double-coated tape. This double-coated tape have re-releasable and re-adhesive agent at least on a rear surface of thereof. The concave 58a of the positioning member 58 is removably bonded to the installing surface in correspondence to the position of the sucking pad 32. After the positioning member 58 is installed at a determined installing position of the supporting tool 30, the supporting tool 30 is removed temporarily from the installing surface by eliminating the negative pressure portion 56.

Then, as shown in Fig. 6, adhesive agent is applied to one main surface of the sucking pad 32 and on portions, of the other main surface thereof, opposed to the pedestal 38. Then, as shown in Fig. 7, the sucking pad 32 is uniformly coated with the adhesive agent. As the adhesive agent, two-part elastic adhesive agent TB3951 having a high degree of release manufactured by Three Bond Co., Ltd. can be used. As shown in Fig. 8, the supporting tool 30 is installed again at a position to which the positioning member 58 has been temporarily attached.

In this case, as shown in Fig. 2 (A), the sucking pad 32 is brought into contact with the installing surface, with the operation rod 44a vertical with respect to the installing surface. The adhesive agent layer 34 is formed between the sucking pad 32 and the installing surface. Then, as shown in Fig. 2 (B), the operation rod 44a is pivoted so that the operation rod 44a is parallel with the installing surface. As a result, the cam 44 is rotated to form the negative pressure portion 56. Consequently, the sucking pad 32 is sucked to the installing surface, thus holding the supporting tool 30 on the installing surface until the adhesive agent layer 34 is hardened. At this time, excess adhesive agent which has been pressed out on the installing surface and on the sucking pad 32 because the sucking pad 32 has been pressed against the installing surface can be accommodated in the negative pressure portion 56 and the space between the pedestal 38 and the other main surface of the sucking pad 32. Thus, the supporting tool 30 installed on the installing surface has an excellent surface finish.

The operation rod 44a is not required after the sucking pad 32 is sucked to the installing surface, with the adhesive agent layer 34 interposed between the installing surface and the sucking pad 32. Therefore, it is removed from the cam 44. A hexagon wrench is mounted on the other end of the operation rod 44a so that the screw 54 is completely tightened by means of the hexagon wrench to fix the supporting bar member 48 to the supporting bar-receiving member 50 completely.

After the installing position of the supporting tool 30 is determined, the positioning member 58 is removed therefrom.

Because the adhesive agent layer 34 of this embodiment consists of adhesive agent of two-part hardening type, the adhesive agent layer 34 is completely hardened with the elapse of a predetermined period of time. After the adhesive agent layer 34 is hardened, the sucking pad 32 and the pedestal 38 are firmly fixed to the installing surface, and the sucking pad 32 and the pedestal 38 are firmly fixed to each other by means of the adhesive agent. Further, because the adhesive agent layer 34 of this embodiment has rubber elasticity, it is resistant to shock.

Then, as shown in Fig. 10, the cover 52 for covering the connection member 36, the horizontal shaft 40, the horizontal shaft-receiving member 42, the cam 44, the operation rod 44a, and the screw 54 is installed on the pedestal 38 so that the appearance of the supporting tool 30 is beautiful.

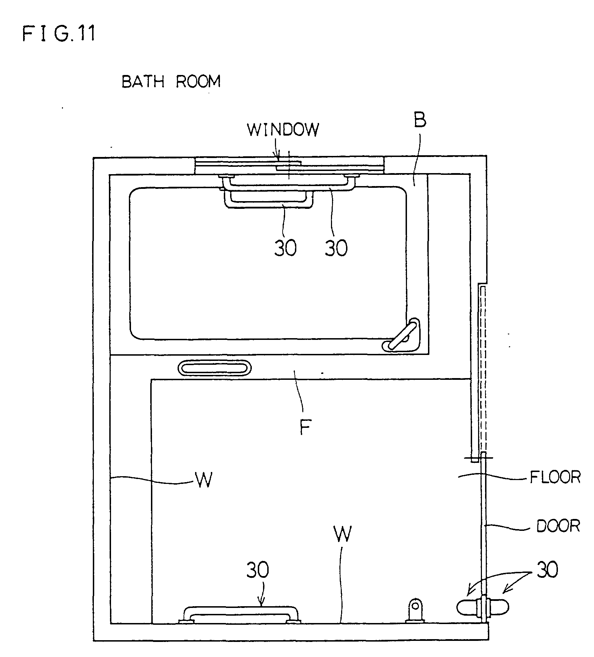

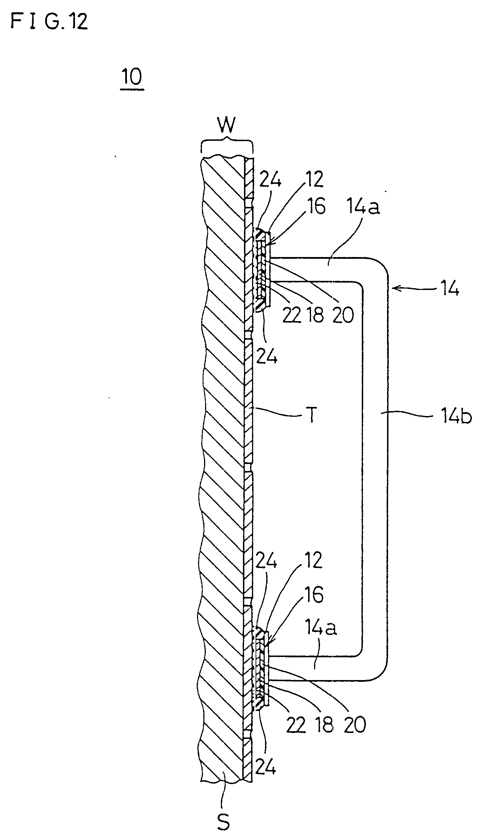

Fig. 11 is a plan view showing a bath room in which the supporting tool 30 shown in Fig. 1 is installed. The supporting tool 30 can be easily installed on a wall of the bath room or a bath tub without forming a hole thereon. In addition to the effect similar to that of an embodiment, shown in Fig. 12, which will be described later, the sucking pad 32 of the supporting tool 30 can be sucked to an installing surface at a predetermined position. Therefore, even though the viscosity of the adhesive agent is low because it is not_hardened, the supporting tool 30 can be held at the predetermined position by means of the sucking pad 32 until the adhesive agent is dried/hardened. That is, the supporting tool 30 can be prevented from being dislocated from the installed position. After the adhesive agent layer 34 is dried/hardened, the supporting tool 30 can be fixed to the installing position with a higher degree of strength. Because the sucking pad 32 is sucked to the installing surface at a high degree of strength, the supporting tool 30 can be installed on a vertical wall surface without being dislocated from the installed position.

In the supporting tool 30, the sucking pad 32 is elastically deformed when the cam 44 is rotated to move the connection member 36 upward from the upper surface of the pedestal 38. As a result, the negative pressure portion 56 is formed between the sucking pad 32 and the installing surface, with the adhesive agent layer 34 interposed between the installing surface and the sucking pad 32. Although the adhesive agent layer 34 is interposed between the installing surface and the sucking pad 32, the sucking force of the sucking pad 32 can be increased by the formation of the negative pressure portion 56. The adhesive agent layer 34 allows the installing surface to be smooth, thus permitting the sucking pad 32 to be bonded and sucked to the installing surface at high adhesive and sealing degrees. Therefore, the sucking pad 32 can be reliably sucked to the installing surface even though the installing surface is irregular in a small degree. After the adhesive agent is dried/hardened, the supporting tool 30 can be fixed to the installing surface firmly.

In the embodiment shown in Fig. 1, the supporting tool 30 can be removably mounted on the installing surface by means of the adhesive agent-unapplied sucking pad 32. Thus, the most suitable installing position of the supporting tool 30 can be determined without forming a hole on the installing surface or injuring it. Thereafter, the sucking pad 32 is coated with adhesive agent, and then, the supporting tool 30 can be bonded to the desired position of the installing surface. In this manner, the supporting tool 30 can be fixed to the best position.

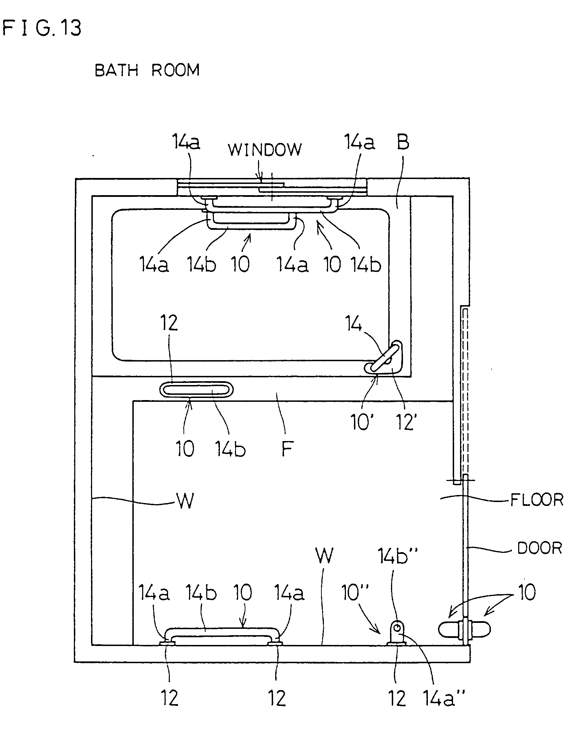

Fig. 12 is an illustration showing a supporting tool according to as embodiment useful for understanding the present invention. Fig. 13 is a plan view showing a bath room in which the supporting tool shown in Fig. 12 is installed on the wall of the bath room. A supporting tool 10 includes two base plates 12 and 12 made of metal such as stainless steel. The base plates 12 and 12 are approximately circular in a plan view.

The supporting tool 10 includes a supporting bar body 14 made of metal such as stainless steel approximately U-shaped in a plan view. The supporting bar body 14 has two supporting members 14a and 14a projecting from one main surface of each of the base plates 12 and 12. In this example, the supporting member 14a and the base plate 12 are fixed to each other by means of welding.

The supporting bar body 14 has a gripping member 14b to be grasped by a user. The gripping member 14b is parallel with the main surface of the base plates 12 and 12, and each of both ends of the gripping member 14b is supported by each of the two supporting members 14a and 14a. The length of the gripping member 14b is adjusted depending on the purpose of use. A rod-shaped material is bent in the shape of "U" as shown in Fig. 12 to form the supporting members 14a and 14a and the gripping member 14b integral with supporting members 14a and 14a.

A bonding material 16 serving as a bonding means is formed on the other main surface of the base plate 12. The bonding material 16 includes a base material 18. The base material 18 is made of a plastic film and has a shape and a size approximately same as those of the base plate 12. A first adhesive agent layer 20 is formed on one main surface of the base material 18. The base material 18 is firmly fixed to the base plate 12 by means of the first adhesive agent layer 20. A second adhesive agent layer 22 is formed on the other main surface of the base material 18. The base material 18 is firmly fixed to the installing surface by means of the second adhesive agent layer 22. Accordingly, the supporting tool 10 can be firmly fixed to the installing surface by bonding it to the installing surface and by pressing the second adhesive agent layer 22 against the installing surface. Preferably, the first adhesive agent layer 20 is resistant to moisture and heat and its adhesive property is so high that the base plate 12 and the base material 18 can be bonded easily thereto. Preferably, the second adhesive agent layer 22 is resistant to moisture and heat and its adhesive property is so high that the base material 18 and the installing surface can be bonded easily thereto. The first adhesive agent layer 20 and the second adhesive agent layer 22 may consist of different adhesive agents or the same adhesive agent if the adhesive agents satisfy the above-described condition. As the bonding material 16 including the first adhesive agent layer 20 and the second adhesive agent layer 22, VHB acrylic foam bonding agent Y-4950 manufactured by Sumitomo 3M Co., Ltd or a building double-coated tape HJ-9210 durable and highly resistant to load and manufactured by Nitto Denko Co., Ltd can be preferably used.

In this embodiment, as shown in Fig. 12, a waterproof material 24 such as silicon sealing material is applied to the space between the periphery of the base plate 12 of the supporting tool 10 and the installing surface. As the waterproof material 24, silicon sealant manufactured by Cemedyne Co., Ltd. can be selected. The application of the waterproof material 24 thereto prevents water from penetrating thereinto, thus improving the durability of the bonding material 16.

A supporting tool 10' shown in Fig. 13 includes a base plate 12' approximately L-shaped in a plan view. The supporting bar body 14 is fixed to one main surface of the base plate 12', and the bonding material 16 is formed on the other main surface thereof, similarly to the above embodiment. Because the base plate 12' of the supporting tool 10' is approximately L-shaped in a plan view, the supporting tool 10' can be fixed to corners of a bath tub B.

A supporting tool 10" also shown in Fig. 13 is different from the supporting tool 10 shown in Fig. 12 in the construction of the supporting bar body 14. The supporting tool 10" includes a pair of narrow supporting members 14a" and 14a". The supporting tool 10" includes a rod-shaped grasping member 14b" extending in parallel with the main surface of the base plates 12 and 12. Each of both ends of the rod-shaped grasping member 14b" is supported by each of the narrow supporting members 14a" and 14a" by inserting each of both ends of the rod-shaped grasping member 14b" into each of the supporting members 14a" and 14a".

The supporting tools 10, 10', and 10" are installed at desired positions of a bath room so that they are grasped by children, old people, handicapped people, adults who give infants a bath, and people taking care of them. Fig. 13 is a plan view showing a bath room in which the supporting tool of this embodiment is used. In this example, the supporting tool 10 is installed on an aluminum frame of a door or on the windowpane thereof as a supporting bar without forming a hole thereon. The supporting tool 10" is installed on a wall surface W proximate to the entrance of the bath room such that it is substantially parallel with the wall surface W. People can get into the bath room or get out therefrom safely by grasping the supporting tool 10" because the place in the vicinity of its entrance is slippery.

Further, people can grasp the supporting tool 10 installed on the wall surface of the bath room when they stand up. Further, the supporting tool 10 can be used as a handrail. That is, in this case, the supporting tool 10 having the grasping member 14b having an appropriate length set according to the longitudinal length of the bath room is installed on the wall surface thereof. People can grasp the supporting tool 10 so that they can walk in the bath room safely.

In addition, people can get into the bath tub B or get out therefrom safely by grasping the supporting tool 10 installed on a floor F continuous with the upper edge of the bath tub B. Moreover, people can get into the bath tub B or get out therefrom safely by grasping the supporting tool 10' installed on a corner of the bath tub B. In particular, because the supporting tool 10' can be mounted on the corner of the bath tub B, it does not make an obstacle in getting into the bath tub B or getting out therefrom. Further, the supporting tool 10 may be mounted on the inner surface of the bath tub B so that people can support themselves therein by grasping it. Furthermore, the supporting tool 10 may be mounted on a wall below a window of the bath room to allow people to see the outside by holding it in their hands.

As described above, it is unnecessary to use special tools to install the supporting tool 10 on a desired position of a wall surface or the like and further, even unskilled person can easily install the supporting tool 10 on the desired position. Thus, the supporting tool 10 can be installed at a low cost. In addition, because it is not necessary to form a hole on the desired position, people are not worried about water leakage in installing it on the bath tub B. Furthermore, unlike in the conventional supporting tool, because the supporting tool 10 eliminates the need for the use of an anchor bolt, it is not necessary to install a flange on the installing surface. Thus, the supporting tool 10 appears beautiful and has simple structure.

The base plate 12 may be in any desired shapes, for example, rectangular or triangular in a plan view. The base plate 12 may be formed of a long and narrow metal plate, and the supporting members 14a and 14a of the supporting bar body 14 may be integrated with the long and narrow base plate 12 at positions proximate to both ends thereof.

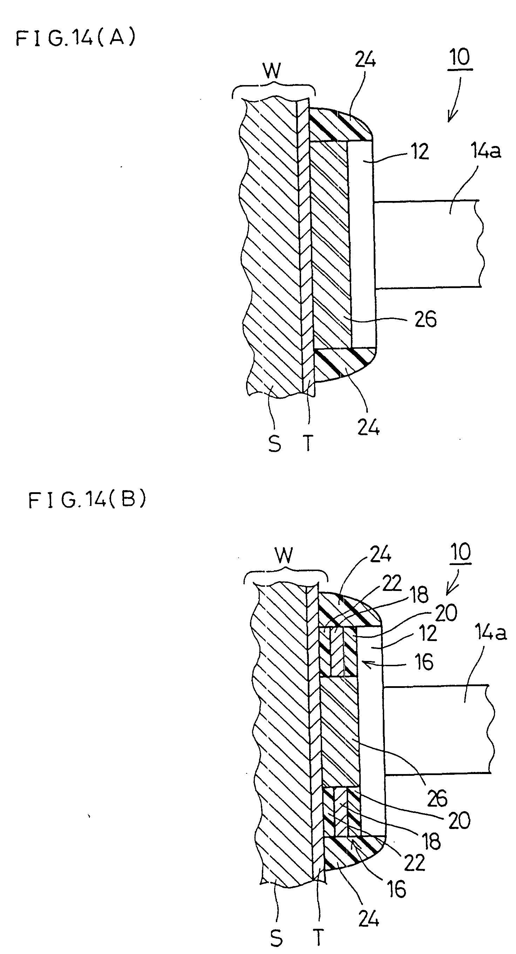

As shown in Fig. 14 (A), as the bonding means, only a layer consisting of building adhesive agent 26 and not including the base material 18 may be formed on the other main surface of the base plate 12.

It is possible to cover the surface of the bonding material 16 and the building adhesive agent 26 both serving as the bonding means with a release sheet and remove it therefrom when the supporting tool 10 is installed on the installing surface.

In the above embodiment, the supporting tool 10 is used in the bath room, but may be installed on a wall surface of a toilet or on a stool.

Fig. 14 (B) is a main portion-depicted sectional view showing still another embodiment of the present invention. A supporting tool 10 shown in Fig. 14 (B) is different from the supporting tool 10 shown in Fig. 12 in its bonding means to be formed on the other main surface of the base plate 12. The bonding means of the supporting tool 10 shown in Fig. 14 (B) includes the bonding material 16 and the building adhesive agent 26. The layer 26 consisting of the building adhesive agent is applied to approximately the middle of the other main surface of the base plate 12. The building adhesive agent 26 may be applied to the other main surface of the base plate 12 in advance or immediately before installing the supporting tool 10 on the installing surface. When the building adhesive agent 26 is applied to the rear surface (the other main surface) of the base plate 12 in advance, the adhesive agent is covered with a release liner to prevent the adhesive agent from being dried/hardened until the supporting tool 10 is installed on the installing surface.

The bonding material 16 is formed in a three-layer construction including the base material 18, the first adhesive agent layer 20, and the second adhesive agent layer 22, similarly to the embodiment shown in Fig. 12. The first adhesive agent layer 20 is used to fix the base material 18 to the base plate 12. The second adhesive agent layer 22 consisting of adhesive agent of pressure-sensitive type is used to bond the base material 18 to the installing surface temporarily. In this embodiment, the bonding material 16 is formed in such a manner that it surrounds the periphery of the building adhesive agent 26 applied to the rear surface of the base plate 12. In this case, the layer of the building adhesive agent 26 is annular in a front view.

In the embodiment shown in Fig. 14 (B), the base plate 12 can be temporarily attached to a predetermined position of the installing surface by means of the bonding material 16. Therefore, even though the viscosity of the adhesive agent is low because it is not hardened, the supporting tool 10 can be held at the predetermined position by means of the bonding material 16 until the adhesive agent is dried/hardened. That is, if the bonding material 16 is not formed on the base plate 12, there is a possibility that the building adhesive agent 26 flows on the installing surface before the adhesive agent is hardened if the viscosity of the building adhesive agent 26 is low. As a result, the base plate 12 is dislocated from the predetermined position. In order to prevent such an inconvenience, it is conceivable to prepare a fixing means separate from the supporting tool 10 so as to fix the base plate 12 to the installing surface until the building adhesive agent 26 is completely dried/hardened. But the preparation of the fixing means does not facilitate the installing operation. In this embodiment, it is not necessary to prepare the fixing means. In this embodiment, the supporting tool 10 can be retained in a selected position by fixing the base plate 12 to the predetermined position temporarily by means of the bonding material 16 until the building adhesive agent 26 is dried/hardened. Thus, the installing operation can be facilitated.

In this embodiment, the supporting tool 10 can be firmly fixed to the installing surface in cooperation of the bonding material 16 and the building adhesive agent 26 after the building adhesive agent 26 is dried/hardened.

It will be apparent from the foregoing that, while the present invention has been described in detail and illustrated, these are only particular illustrations and examples and the present invention is not limited to these, the scope of the present invention is limited only by the appended claims.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A supporting tool (30) to be grasped by a utilizer to support his/her body, comprising:
a sucking pad (32) which is elastic and one main surface of which is removably sucked to an installing surface;
a shaft-shaped connection member (36), one end side of which extends vertically from the other main surface of the sucking pad (32) ;
a pedestal (38) having a pressing portion (46) consisting of an annular projection member which presses a periphery of the sucking pad (32) and through which the connection member (36) is inserted;
a supporting bar body (50), one end of which is fixed to a surface of the pedestal (38) opposite to a sucking pad-located side and which is grasped by the utilizer;
an adhesive agent layer (34) formed on at least one main surface of the sucking pad (32) and fixing the sucking pad (32) to the installing surface; and
a rotary member (44) mounted to the pedestal (38), the rotary member (44) being arranged such that rotation thereof, with the periphery of the sucking pad (32) being pressed against the installing surface by means of the pressing portion (46), moves the connection member (36) upward from an upper surface of the pedestal (38), with the result that the sucking pad (32) is elastically deformed to form a negative pressure portion (56), with the adhesive agent layer (34) interposed between the installing surface and the sucking pad (32).

2. The supporting tool (30) according to- claim 1, wherein the adhesive agent layer (34) is formed between the pedestal (38) and the other main surface of the sucking pad (32) and on the one main surface of the sucking pad (32).

3. A method of installing a supporting tool (30), to be held by a utilizer, on the best position of an installing surface to which a sucking pad (32) of the supporting tool (30) is removably sucked, comprising the steps of:
determining the best position on which the supporting tool (30) is installed, by attaching the supporting tool (30) on the installing surface by means of the sucking pad (32) temporarily;
removing the supporting tool (30) from the installing surface after giving a mark (58) on the determined position and applying adhesive agent (34) to a to-be-installed side of the sucking pad (32); and
sucking the adhesive agent-applied sucking pad (32) to the marked position again and drying or hardening the adhesive agent (34).

4. The method according to claim 3, wherein the mark (58) is given by a positioning member having re-releasable and re-adhesive agent formed on a rear surface thereof.

5. The method according to claim 3, wherein the mark (58) is given by a positioning member having re-releasable and re-adhesive agent formed on a rear surface thereof and having a cut-out (58a), the shape of which corresponds to an outer shape of the sucking pad (32).

6. The method of one or more of claims 3-5, wherein the sucking pad (32) of the supporting tool (30) is temporarily sucked by forming a negative pressure portion (56) between the sucking pad (32) and the installing surface.

7. A supporting tool (10) to be grasped by a utilizer to support his/her body, comprising:
a base plate (12) which is installed on an installing surface such as a wall surface or the like;
a supporting bar body (14) which projects from one main surface of the base plate (12) and is grasped by the utilizer; and
an adhesive means formed on the other main surface of the base plate (12) and fixing the base plate (12) to the installing surface, wherein the adhesive means includes:
a bonding material (16) formed on a part of the other main surface of the base plate (12) and attaching the base plate (12) to the installing surface temporarily; and
adhesive agent (26) which is formed on a part of the other main surface of the base plate (12) such that the adhesive agent (26) is positioned in an area other than the area occupied with the bonding material (16) and which fixes the base plate (12) to the installing surface, and wherein the bonding material (16) further includes:
a base material (18);
a first adhesive agent layer (20) formed on one main surface of the base material (18) and fixing the base material (18) to the base plate (12); and
a second adhesive agent layer (22) formed on the other main surface of the base material (18) and consisting of adhesive agent of pressure-sensitive type and fixing the base material (18) to the installing surface.

8. The supporting tool (10) according to claim 7, wherein the adhesive agent of the first adhesive agent layer (20) is suitably adhesive to the base plate (12); and the adhesive agent of the second adhesive agent layer (22) is suitably adhesive to the installing surface on which the supporting tool (10) is installed.

## Patentansprüche

1. Ein Haltegerät (30), das von einem Benutzer gegriffen werden soll, um seinen/ihren Körper zu halten, das folgendes umfaßt:
ein Saugkissen (32), das elastisch ist und von dem eine Hauptfläche abnehmbar an einer Montagefläche angesaugt wird;
ein stielförmiges Verbindungsglied (36), dessen eine Endseite sich senkrecht aus der anderen Hauptfläche des Saugkissens (32) erstreckt;
einen Sockel (38), der einen Preßabschnitt (46) aufweist, der aus einem ringförmigen Vorsprungsglied besteht, das einen Außenrand des Saugkissens (32) anpreßt und durch den das Verbindungsglied (36) gesteckt wird;
einen Haltestangenkörper (50), dessen ein Ende an einer Fläche des Sockels (38) befestigt ist, die einer am Saugkissen befindlichen Seite gegenüber liegt, und der vom Benutzer gegriffen wird;
eine Klebemittelschicht (34), die auf zumindest einer Hauptfläche des Saugkissens (32) ausgebildet ist und die das Saugkissen (32) an der Montagefläche befestigt; und
ein am Sockel (38) angebrachtes Drehglied (44), wobei das Drehglied (44) derart angeordnet ist, daß seine Drehung, während der Außenrand des Saugkissens (32) mithilfe des Preßabschnitts (46) gegen die Montagefläche gedrückt wird, das Verbindungsglied (36) von einer oberen Fläche des Sockels (38) nach oben bewegt, und zwar mit dem Ergebnis, daß das Saugkissen (32) elastisch verformt wird, um einen Unterdruckabschnitt (56) zu bilden, wobei die Klebemittelschicht (34) zwischen der Montagefläche und dem Saugkissen (32) liegt.

2. Das Haltegerät (30) nach Anspruch 1, wobei die Klebemittelschicht (34) zwischen dem Sockel (38) und der anderen Hauptfläche des Saugkissens (32) und auf der einen Hauptfläche des Saugkissens (32) gebildet ist.

3. Ein Verfahren zum Montieren eines von einem Benutzer gehaltenen Haltegeräts (30) an der besten Stelle einer Montagefläche, an der ein Saugkissen (32) des Haltegeräts (30) abnehmbar angesaugt wird, das folgende Schritte umfaßt:
das Bestimmen der besten Stelle, an der das Haltegerät (30) montiert wird, indem das Haltegerät (30) mithilfe des Saugkissens (32) vorübergehend an der Montagefläche befestigt wird;
das Wegnehmen des Haltegeräts (30) von der Montagefläche, nachdem die bestimmte Stelle mit einer Markierung (58) versehen wurde und auf eine zu montierende Seite des Saugkissens (32) ein Klebemittel (34) aufgetragen wurde;
das neuerliche Ansaugen des Saugkissens (32), auf das das Klebemittel aufgetragen wurde, an der markierten Stelle und das Trocknen oder Härten des Klebemittels (34).

4. Das Verfahren nach Anspruch 3, wobei die Markierung (58) mittels eines Positionierungsglieds bereitgestellt wird, das auf seiner Rückfläche ein wieder-lösbares und wieder-klebendes Mittel aufweist.

5. Das Verfahren nach Anspruch 3, wobei die Markierung (58) mittels eines Positionierungsglieds bereitgestellt wird, das auf seiner Rückfläche über ein wieder-lösbares und wieder-klebendes Mittel verfügt und das einen Ausschnitt (58a) aufweist, dessen Form einer äußeren Form des Saugkissens (32) entspricht.

6. Das Verfahren nach einem oder mehreren der Ansprüche 3-5, wobei das Saugkissen (32) des Haltegeräts (30) vorübergehend angesaugt wird, indem zwischen dem Saugkissen (32) und der Montagefläche ein Unterdruckabschnitt (56) ausgebildet wird.

7. Ein Haltegerät (10), das von einem Benutzer gegriffen wird, um seinen/ihren Körper zu halten, das folgendes umfaßt:
eine Grundplatte (12), die auf einer Montagefläche wie beispielsweise einer Wandfläche oder dergleichen montiert ist;
ein Haltestangenkörper (14), der aus einer Hauptfläche der Basisplatte (12) vorragt und der vom Benutzer gegriffen wird; und
ein auf der anderen Hauptfläche der Grundplatte (12) gebildetes Klebemittel, das die Grundplatte (12) an der Montagefläche befestigt, wobei das Klebemittel folgendes einschließt:
ein Verbindungsmaterial (16), das an einem Teil der anderen Hauptfläche der Grundplatte (12) ausgebildet ist und das die Grundplatte (12) vorübergehend an der Montagefläche befestigt; und
ein Klebemittel (26), das auf einem Teil der anderen Hauptfläche der Grundplatte (12) derart ausgebildet ist, daß das Klebemittel (26) in einem anderen Bereich als dem vom Verbindungsmaterial (16) belegten Bereich positioniert ist, und das die Grundplatte (12) an der Montagefläche befestigt, und wobei das Verbindungsmaterial (16) weiterhin folgendes einschließt:
ein Grundmaterial (18);
eine erste Klebemittelschicht (20), die auf einer Hauptfläche des Grundmaterials (18) gebildet ist und die das Grundmaterial (18) an der Grundplatte (12) befestigt; und
eine zweite Klebemittelschicht (22), die auf der anderen Hauptfläche des Grundmaterials (18) ausgebildet ist und die aus einem Klebemittel druckempfindlicher Art besteht und die das Grundmaterial (18) an der Montagefläche befestigt.

8. Das Haltegerät (10) nach Anspruch 7, wobei das Klebemittel der ersten Klebemittelschicht (20) auf eine geeignete Weise an die Grundplatte (12) klebend ist; und worin das Klebemittel der zweiten Klebemittelschicht (22) auf eine geeignete Weise an die Montagefläche klebend ist, an der das Haltegerät (10) montiert ist.

## Revendications

1. Accessoire de support (30) destiné à être saisi par un utilisateur pour supporter son corps, comprenant :
- un patin d'aspiration (32) qui est élastique et dont une surface principale est aspirée, de façon amovible, contre une surface de montage ;
- un élément de liaison (36) conformé en arbre, dont un côté d'extrémité s'étend verticalement à partir de l'autre surface principale du patin d'aspiration (32) ;
- un socle (38) ayant une portion de pression (46) constitué d'un élément en saillie annulaire qui presse la périphérie du patin d'aspiration (32) et à travers lequel l'élément de liaison (36) est inséré ;
- un corps de support (50), dont une extrémité est fixée à une surface du socle (38), opposée au côté situé vers le patin d'aspiration et qui est saisi par l'utilisateur ;
- une couche d'agent adhésif (34) formée sur au moins la surface principale du patin d'aspiration (32) et fixant le patin d'aspiration (32) à la surface de montage ; et
- un élément rotatif (44) monté sur le socle (38), l'élément rotatif (44) étant agencé de sorte que la rotation de celui-ci, avec la périphérie du patin d'aspiration (32) qui est pressé contre la surface de montage par l'intermédiaire de la portion de pression (46), déplace l'élément de liaison (36) vers le haut à partir d'une surface supérieure du socle (38), avec pour résultat que le patin d'aspiration (32) est élastiquement déformé pour former une portion de pression négative (56), avec la couche d'agent adhésif (34) interposée entre la surface de montage et le patin d'aspiration (32).

2. Accessoire de support (30) selon la revendication 1, dans lequel la couche d'agent adhésif (34) est réalisée entre le socle (38) et l'autre surface principale du patin d'aspiration (32) et sur la surface principale du patin d'aspiration (32).

3. Procédé pour monter un accessoire de support (30) destiné à être tenu par un utilisateur, dans la meilleure position d'une surface de montage à laquelle un patin d'aspiration (32) de l'accessoire de support (30) est aspiré de façon amovible, comprenant les étapes de :
- déterminer la meilleure position sur laquelle l'accessoire de support (30) est monté, en fixant temporairement l'accessoire de support (30) sur la surface de montage par l'intermédiaire du patin d'aspiration (32) ;
- retirer l'accessoire de support (30) de la surface de montage après avoir placé un repère (58) sur la position déterminée et appliquer un agent adhésif (34) sur le côté à monter du patin d'aspiration (32) ; et
- aspirer de nouveau le patin d'aspiration (32) pourvu d'un agent adhésif sur la position marquée et sécher ou durcir l'agent adhésif (34).

4. Procédé selon la revendication 3, dans lequel le repère (58) est fourni par un élément de positionnement ayant un agent re-adhésif et re-libérable formé sur la surface arrière de celui-ci.

5. Procédé selon la revendication 3, dans lequel le repère (58) est fourni par un élément de positionnement ayant un agent re-adhésif et re-libérable formé sur la surface arrière de celui-ci et ayant une découpe (58a) dont la forme correspond à la forme externe du patin d'aspiration (32).

6. Procédé selon l'une ou plusieurs des revendications 3 - 5, dans lequel le patin d'aspiration (32) de l'accessoire de support (30) est aspiré de façon temporaire en réalisant une portion de pression négative (56) entre le patin d'aspiration (32) et la surface de montage.

7. Accessoire de support (10) destiné à être saisi par un utilisateur pour supporter son corps, comprenant :
- une plaque de base (12) qui est montée sur une surface de montage telle qu'une surface murale ou analogue ;
- un corps de support (14) qui fait saillie d'une surface principale de la plaque de base (12) et est saisi par l'utilisateur ; et
- des moyens adhésifs formés sur l'autre surface principale de la plaque de base (12) et fixant la plaque de base (12) à la surface de montage, où les moyens adhésifs incluent :
- une matière de liaison (16) formée sur une partie de l'autre surface principale de la plaque de base (12) et fixant temporairement la plaque de base (12) à la surface de montage ; et
- un agent adhésif (26) qui est formé sur une partie de l'autre surface principale de la plaque de base (12) de sorte que l'agent adhésif (26) est positionné dans une zone autre que la zone occupée par la matière de liaison (16) et qui fixe la plaque de base (12) à la surface de montage, et où la matière de liaison (16) comprend de plus :
- une matière de base (18) ;
- une première couche d'agent adhésif (20) formée sur une surface principale de la matière de base (18) et fixant la matière de base (18) à la plaque de base (12) ; et
- une seconde couche d'agent adhésif (22) formée sur l'autre surface principale de la matière de base (18) et comprenant un agent adhésif d'un type sensible à la pression et fixant la matière de base (18) à la surface de montage.

8. Accessoire de support (10) selon la revendication 7, dans lequel l'agent adhésif de la première couche d'agent adhésif (20) adhère de façon appropriée à la plaque de base (12) ; et l'agent adhésif de la seconde couche d'agent adhésif (22) adhère de façon appropriée à la surface de montage sur laquelle l'accessoire de support (10) est monté.
